# DEMANDE DE BREVET EUROPEEN

(11) **EP 0 612 606 A1**
(43) Date de publication de la demande: **31.08.1994**
(21) Numéro de dépôt: 94400412.6
(22) Date de dépôt: 25.02.1994
(51) Int. Cl.: B29C 53/58, B29C 53/76

(54) **Procédé et dispositif d'enroulement filamentaire**

(30) Priorité: 26.02.1993 FR 9302304
(71) Demandeur: ROUSSEAU S.A., F-79160 Coulonges sur L'Autize (FR)
(72) Inventeur: Rousseau, Marcel, F-79160 Fenioux (FR)
(74) Mandataire: Polus, Camille

(57) **Abrégé**

Procédé d'enroulement filamentaire, notamment pour la fabrication de trémies coniques de silo de stockage, caractérisé en ce qu'on dispose une forme (10) comprenant deux troncs de cône (12,14) assemblés par leur grande base (16,18), on met en rotation cette forme (10) autour de son axe longitudinal (24), on dispose des moyens (30) de déroulement de fils (80) animés d'un mouvement de translation alternative par rapport à l'axe longitudinal (24) de cette forme (10), et on procède à l'enroulement des fils (80) autour de ladite forme (10). L'invention a également pour objet le dispositif permettant de mettre en oeuvre le procédé.

## Description

La présente invention a pour objet un procédé et un dispositif d'enroulement filamentaire.

De nombreux domaines d'activité requièrent des systèmes de stockage et plus particulièrement des silos de stockage.

Ces silos sont destinés à recevoir des produits en poudre ou pulvérulents, comme par exemple des granulés d'engrais ou bien des poudres pour l'industrie alimentaire ou bien encore des granulés pour l'alimentation du bétail.

On entendra pour la suite de la description comme produits en grains, tout produit en poudre, concassé finement ou bien encore pulvérulent.

Ces silos de stockage doivent également permettre la distribution du produit contenu dans le silo.

A cet effet, ils sont généralement pourvus d'une trémie munie d'un obturateur, lui-même relié à un convoyeur, à une bascule ou à tout autre système industriel de transfert.

La réalisation de tels silos peut s'effectuer à l'aide de matériaux métalliques et notamment de tôles en inox lorsqu'il s'agit d'industrie alimentaire, mais les fabrications se sont depuis longtemps orientées vers des matériaux composites comprenant des fibres associées à des résines.

Les résines utilisées sont de qualité alimentaire, si bien que les silos obtenus sont multi-usages, y compris pour l'agro-alimentaire.

Ces silos donnent totale satisfaction quant à leur utilisation, mais il subsiste un problème quant à la fabrication des trémies.

En effet, les silos sont obtenus de façon connue par enroulement de fils sur une forme support qui constitue un mandrin avec imprégnation préalable des fibres.

L'interposition de nappes de fils dans un sens et dans l'autre permet de conférer au cylindre ainsi réalisé des propriétés de grande résistance mécanique dans les différentes directions et ceci moyennant une épaisseur de paroi très réduite.

La fabrication de la trémie dont le profil est tronconique reste plus délicate.

En effet, pour de telles fabrications, il est nécessaire de poser une forme sur un support et de recouvrir cette forme d'un mélange de fibres et de résine.

Des dispositifs du type pistolet permettent la projection simultanée de fibres et d'une résine qui se trouvent plaquées et mélangées en fine couche sur la forme préalablement enduite d'un agent de démoulage.

Cette opération est manuelle et requiert un grand savoir-faire pour donner à la paroi une homogénéité sensiblement constante et il est nécessaire au fur et à mesure de la projection de "rouler" la résine et les fibres courtes ainsi projetées de façon à éliminer les bulles et à bien plaquer les fibres dans la résine.

En outre, il s'agit de fibres courtes, si bien que la résistance mécanique recherchée est obtenue grâce à une importante quantité de résine au détriment des fibres.

Ceci conduit généralement à une épaisseur de paroi supérieure à celle du silo.

Dans le but d'améliorer la qualité des produits obtenus et surtout la reproductibilité, il apparaît nécessaire d'automatiser une telle opération.

De plus, une automatisation permet de supprimer les postes relativement pénibles pour les opérateurs et d'améliorer les conditions de travail par suppression de particules en suspension dans l'environnement immédiat.

D'autre part, une économie de matière et surtout de résine conduira à l'abaissement du prix de revient.

Le recours à des fils de grande longueur plutôt qu'à des fibres courtes est une solution intéressante car, à épaisseur d'enroulement égale, la résistance mécanique est plus importante pour les fibres longues que pour les fibres courtes.

Or, si l'on sait effectuer des enroulements cylindriques, il en va tout autrement d'un enroulement sur un cône car les moyens à mettre en oeuvre deviennent rapidement incompatibles avec les possibilités d'équipement de l'industrie.

La technique d'enroulement filamentaire est par contre bien connue, notamment celle qui consiste à enrouler des nouvelles fibres telles que des fils en Kevlar (marque déposée au nom de DUPONT DE NEMOURS) ou des fibres de carbone.

Cette technique est couramment appliquée pour la réalisation de réservoirs, notamment pour les réservoirs de combustible pour tous les engins volants.

Le procédé consiste à réaliser un réservoir métallique par exemple, réservoir autour duquel on enroule des fibres préalablement imprégnées d'un liant, ce qui permet d'augmenter considérablement la résistance mécanique de l'enveloppe métallique dont l'épaisseur est très faible, et ceci à l'aide de matériaux présentant de très bonnes propriétés de résistance chimique, thermique ou bien encore de grandes qualités d'absorption des chocs.

On constate que dans un tel cas, l'enveloppe métallique subsiste à l'intérieur de l'enveloppe en matériau composite.

La présente invention a pour but au contraire de proposer un procédé permettant la réalisation de trémies en matériau composite par enroulement filamentaire, ne comportant aucune enveloppe intérieure, dont la résistance mécanique est importante, dont l'épaisseur de paroi est diminuée, dont la mise en oeuvre est totalement automatisée, qui réduit les consommations de résine, qui améliore les conditions de travail, et qui autorise une cadence de production compatible avec la fabrication des parties cylindriques correspondantes.

A cet effet, le procédé d'enroulement filamentaire selon l'invention, notamment appliqué à la fabrication de trémies coniques de silos de stockage se caractérise en ce qu'on dispose une forme comprenant deux troncs de cône assemblés par leur grande base, en ce qu'on met en rotation cette forme autour de son axe longitudinal, en ce qu'on dispose à proximité immédiate de cette forme des moyens de déroulement des fils, animés d'un mouvement alternatif de translation, parallèle à l'axe longitudinal de la forme, et en ce qu'on procède à l'enroulement des fils autour de cette forme.

Ce procédé est en outre caractérisé par une étape particulière qui consiste à enrouler les fils initialement à l'une puis à l'autre extrémité des deux troncs de cône puis à procéder à l'enroulement de l'ensemble de la forme, d'une extrémité à l'autre, par déplacement alternatif des moyens de déroulement de façon à créer un renfort aux extrémités de la forme.

Selon un mode de réalisation particulier de ce procédé, on réduit l'amplitude du déplacement alternatif des moyens de déroulement des fils par rapport à la forme de façon à compenser l'augmentation du diamètre des troncs de cône et à obtenir une épaisseur sensiblement constante.

L'invention a également pour objet le dispositif d'enroulement filamentaire permettant la mise en oeuvre de ce procédé et ce dispositif comprend une forme d'enroulement comprenant deux troncs de cône assemblés de façon amovible par leur grande base et solidaires d'un arbre d'entraînement disposé suivant l'axe longitudinal de la forme, des moyens de déroulement des fils solidaires d'un support mobile en translation alternative parallèlement au dit arbre d'entraînement, des moyens d'alimentation et d'enduction des fils avec un liant, ainsi qu'un automate programmable de pilotage de la vitesse de rotation de la forme, des déplacements en translation du support mobile, des moyens de déroulement et des moyens d'alimentation et d'enduction.

Selon un mode de réalisation particulier du dispositif, les moyens de déroulement comprennent un premier bras mobile en translation dans le plan horizontal, un second bras coaxial au premier bras, ce second bras étant mobile en rotation par rapport au premier bras et muni à son extrémité d'une tête de guidage, le premier bras étant lui-même disposé à la partie supérieure d'une tourelle solidaire du chariot et mobile en rotation autour d'un axe vertical.

Il est également prévu un rouleau d'essorage monté dans la tête de guidage, ce rouleau d'essorage étant disposé au-dessus d'une goulotte de récupération du liant.

Dans un mode préférentiel de réalisation de l'invention, le support mobile est un chariot monté sur rails et muni d'une motorisation, ce chariot supportant également les bobines de fil.

Quant aux moyens d'alimentation et d'enduction des fils avec du liant, ils comprennent des galets montés libres en rotation et noyés dans un bac réservoir de liant.

Ils comprennent des peignes disposés notamment à l'entrée et à la sortie du bac ainsi qu'à la sortie de la tête de guidage.

Selon un mode de réalisation préférentiel de l'invention, les moyens d'alimentation comprennent deux nappes de seize fils disposées en une nappe unique par interposition des fils de chacune des nappes dans un même plan à la sortie de la tête de guidage.

La présente invention est décrite ci-après en regard des dessins annexés sur lesquels :
- la figure 1 représente une vue schématique d'une forme comprenant deux troncs de cône assemblés par leur grande base, ainsi que le plan d'enroulement,
- la figure 2 représente une vue schématique du dispositif d'enroulement selon l'invention,
- la figure 3 représente une vue de côté du dispositif représenté sur la figure 2, et
- la figure 4 représente une vue en élévation latérale d'une trémie obtenue par la mise en oeuvre du procédé selon l'invention.

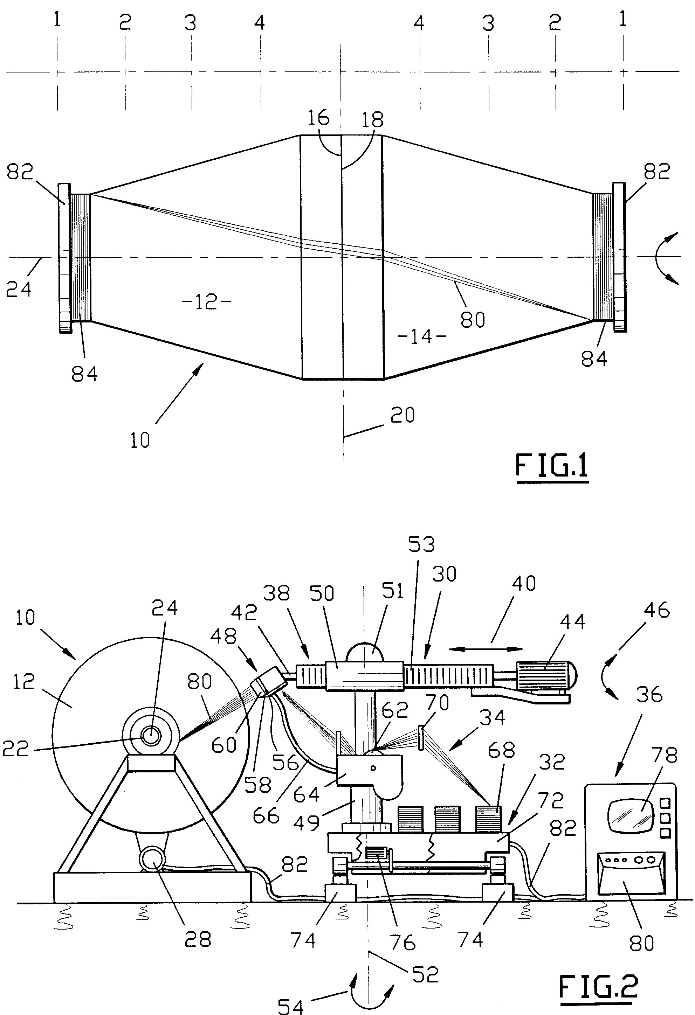

Sur la figure 1 on a représenté une forme 10, comprenant deux troncs de cône 12 et 14, assemblés par leur grande base 16 et 18 de part et d'autre d'un même plan 20.

Une telle forme est réalisée de façon générale à partir de tôles métalliques.

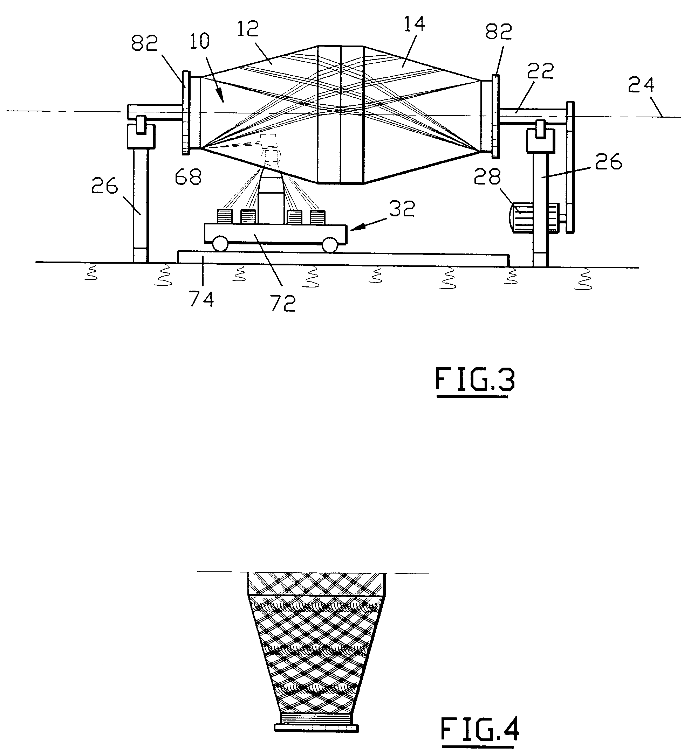

Sur la figure 2, on retrouve la forme 10 avec le tronc de cône 12 monté sur un arbre support 22, monté à rotation autour de l'axe longitudinal 24 de la forme.

Cet arbre 22 repose sur des supports à galets 26, représentés également sur la figure 3.

Des moyens d'entraînement 28 en rotation de la forme autour de l'axe 24 sont également représentés sur les figures 2 et 3.

Le dispositif d'enroulement filamentaire comprend en outre des moyens 30 de déroulement de fils, solidaires d'une support mobile 32, ainsi que des moyens 34 d'alimentation des fils avec du liant ainsi qu'un automate programmable 36.

Les moyens de déroulement des fils comprennent un premier bras 38, mobile en translation dans le plan horizontal comme indiqué par les flèches 40, ainsi qu'un second bras 42, coaxial au premier bras et mobile en rotation par rapport à ce premier bras grâce à un moteur 44 et ceci suivant la double flèche 46.

Les mouvements en translation du premier bras 38 sont obtenus à l'aide du moteur 51, qui comprend un pignon engrenant avec une crémaillère 53, portée par le bras 38.

Le premier bras comprend également à son extrémité une tête 49 de guidage des fils.

Le premier bras est disposé à la partie supérieure 50 d'une tourelle 49, solidaire du support mobile 32 et elle-même mobile en rotation autour d'un axe vertical 52, comme indiqué par la flèche 54.

La tête de guidage comprend un rouleau d'essorage 56, disposé au-dessus d'une goulotte 58 de récupération du liant en excès.

Un peigne 60 est prévu à l'extrémité de la tête de guidage.

Les moyens d'alimentation et d'enduction de liant comprennent des galets 62, montés libres en rotation et noyés dans un bac 64 réserve de liant auquel est par ailleurs connecté un tube flexible 66 qui relie la goulotte 58 à ce bac.

Les bobines de fil 68 sont disposées sur le support mobile 32 et il est prévu des plaques de guidage 70 de type connu, munies de trous à travers lesquels passent les fils, ces trous formant des chas.

Le support mobile 32 comprend un chariot 72, mobile en translation sur des rails 74, disposés parallèlement à l'axe longitudinal 24 de la forme 10.

Ce chariot 72 est en outre équipé d'une motorisation 76 lui permettant des déplacements alternatifs en translation sur les rails 74, parallèlement à l'axe longitudinal 24 de rotation de la forme 10.

L'automate programmable 36 comprend de façon connue des moyens de commande et de programmation 80 ainsi qu'un bus de liaison 82 permettant le pilotage des motorisations 76 du chariot et 28 de la forme et un écran de visualisation 78.

Le fonctionnement du dispositif qui vient d'être décrit en accord avec le procédé selon l'invention, consiste à enrouler sur la forme 10 ainsi que cela est représenté sur la figure 1, une nappe de fils 80.

En effet, dans le mode de réalisation préférentiel retenu pour l'invention, il est prévu deux fois 16 bobines qui délivrent deux fois 16 fils formant deux nappes distinctes de 16 fils.

Ces fils passent à travers les chas 70 puis sont enduits de liant par passage entre les galets 62, à l'intérieur du bac réservoir de liant 64, puis sont tendus par la tête de guidage 48, les fils venant s'appliquer tendus sur le rouleau d'essorage 56.

L'excès de liant s'écoule dans la goulotte de récupération 58, ce liant en excès étant conduit par le tube flexible 66 vers le réservoir 64.

Le peigne 60 permet de combiner les deux nappes de 16 fils en une nappe unique de 32 fils situés dans un même plan et cette nappe de 32 fils référencée 80 est appliquée sur la forme 10.

Le dispositif fonctionne ainsi que décrit ci-après.

L'unité programmable commande de mise en rotation la forme 10 grâce au moteur 28, ce qui entraîne l'arbre 22 qui tourne en appui sur le support à galets 26 autour de l'axe de rotation 24.

Le chariot 72 est entraîné en déplacement alternatif grâce à la motorisation 76 suivant un plan établi et conformément au procédé selon l'invention.

On constate que le dispositif selon l'invention constitue un ensemble à cinq degrés de liberté, le premier étant la rotation autour de l'axe 24, le deuxième étant le mouvement en translation alternative du chariot 72, le troisième étant la rotation autour de l'axe 52 de la tourelle 49, le quatrième étant le déplacement en translation du bras 38 par rapport à cette tourelle 49, et le cinquième étant le mouvement de rotation de la tête de guidage 48 ainsi qu'indiqué par la flèche 46.

Le schéma d'enroulement conforme au procédé selon l'invention est représenté schématiquement sur la figure 1.

Il consiste à prévoir un enroulement aux deux extrémités des parties tronconiques 12 et 14 de la forme 10.

En effet, préalablement à l'enroulement, des brides 82 sont montées aux extrémités des parties tronconiques 12 et 14, ces brides étant fabriquées à part et simplement rapportées.

La première étape consiste à prévoir un enroulement des fils enduits de façon circulaire et ceci sans translation du chariot 33, de façon à réaliser un premier enroulement 84, schématiquement représenté sur la figure 1 au droit des brides 82.

Une translation est alors nécessaire pour passer de l'extrémité de la partie tronconique 12 à l'extrémité de la partie tronconique 14.

Puis, en combinant les translations du chariot et les différents mouvements du premier et du second bras de la tourelle ainsi que de la forme 10, on procède à un enroulement de la nappe de fils 80, à la façon d'un cocon, tout autour de la forme 10.

L'amplitude des déplacements en translation du chariot correspond sensiblement à la distance qui sépare les extrémités des parties tronconiques 12 et 14.

On constate alors qu'il y a une forte densité de fils à proximité des deux extrémités, compte tenu de la diminution de surface des parties tronconiques, tandis que la densité de fil est faible au voisinage du plan de jonction 20 des grandes bases 16 et 18 de ces parties tronconiques 12 et 14.

Aussi, le procédé selon l'invention prévoit une diminution progressive de l'amplitude des translations du chariot avec des pas variables référencés 1, 2, 3 et 4 sur la figure 1.

Aussi, lorsque la densité de fils enduits est suffisante au droit de la section 1, l'amplitude de déplacement en translation du chariot est réduite à la distance séparant les deux limites référencées 2, puis une fois la densité de fils atteinte au droit de ces limites référencées 2, le dispositif effectue une nouvelle diminution de l'amplitude qui conduit à un enroulement délimité par les références 3 et ainsi de suite jusqu'à la référence 4 et plus si nécessaire en fonction des dimensions de la forme, du nombre de fils des nappes, du diamètre des fils et de tous les paramètres influant sur les capacités de recouvrement durant l'opération d'enroulement.

On obtient alors une homogénéité en épaisseur avec un renfort au droit de la bride et on peut prévoir également un enroulement à proximité immédiate du plan 20 correspondant à la jonction des grandes bases 16 et 18 de façon à renforcer également l'extrémité supérieure de la trémie, extrémité qui est appelée à permettre la jonction avec le corps du silo.

En effet, une fois la résine polymérisée, l'ensemble du dispositif est arrêté et la forme montée sur son arbre 22 est retirée du système.

Il suffit alors d'effectuer une découpe circulaire dans le plan 20 perpendiculairement à l'axe longitudinal 34 pour obtenir deux éléments tronconiques qui peuvent être aisément démoulés de la forme 10 par extraction de part et d'autre du plan de jonction 20.

Il faut bien entendu, prévoir préalablement l'enduction de la forme 10 par un agent de démoulage, cette précaution étant bien connue de l'homme de l'art du domaine concerné.

## Revendications

1. Procédé d'enroulement filamentaire, notamment pour la fabrication de trémies coniques de silo de stockage, caractérisé en ce qu'on dispose une forme comprenant deux troncs de cône assemblés par leur grande base, on met en rotation cette forme autour de son axe longitudinal, on dispose des moyens de déroulement de fils animés d'un mouvement de translation alternative par rapport à l'axe longitudinal de cette forme, et on procède à l'enroulement des fils autour de ladite forme.

2. Procédé d'enroulement filamentaire selon la revendication 1, caractérisé en ce qu'on enroule les fils initialement à l'une puis à l'autre extrémité des deux troncs de cône, puis on procède à l'enroulement d'une extrémité à l'autre tout autour de la forme par rotation de celle-ci et par déplacement alternatif des moyens de déroulement de façon à créer un renfort aux extrémités de la forme.

3. Procédé d'enroulement filamentaire selon la revendication 1 ou 2, caractérisé en ce que, au fur et à mesure de l'enroulement, on réduit l'amplitude du déplacement alternatif des moyens de déroulement de façon à compenser l'augmentation de densité due aux variations de diamètre dûs à la forme tronconique.

4. Dispositif d'enroulement filamentaire permettant la mise en oeuvre selon l'une quelconque des revendications 1 à 3 du procédé, caractérisé en ce qu'il comprend une forme (10) d'enroulement comprenant deux troncs de cône (12, 14) assemblés de façon amovible par leur grande base (16, 18) et solidaires d'un arbre (22) d'entraînement disposé suivant l'axe longitudinal (24) de la forme (10), des moyens de déroulement (30) des fils solidaires d'un support (32) mobile en translation alternative parallèlement à l'axe longitudinal (24), des moyens d'alimentation et d'enduction (34) des fils avec du liant, et un automate (36) programmable de pilotage de la vitesse de rotation de la forme, des déplacements en translation des moyens de déroulement et des moyens d'alimentation et d'enduction.

5. Dispositif d'enroulement filamentaire selon la revendication 4, caractérisé en ce que les moyens de déroulement (30) comprennent un premier bras (38) mobile en translation dans le plan horizontal, un second bras (42) coaxial au premier, mobile en rotation par rapport à ce premier bras (30) et muni à son extrémité d'une tête de guidage (48), le premier bras (30) étant disposé à la partie supérieure (50) d'une tourelle (49) solidaire du support (32) et mobile en rotation autour d'un axe vertical (54).

6. Dispositif d'enroulement filamentaire selon la revendication 5, caractérisé en ce que la tête de guidage (48) comprend un rouleau d'essorage (56) disposé au-dessus d'une goulotte (58) de récupération du liant en excès.

7. Dispositif d'enroulement filamentaire selon l'une quelconque des revendications 4, 5 ou 6, caractérisé en ce que le support mobile (32) comprend un chariot (72) monté sur rails (74) et pourvu d'une motorisation (76), chariot sur lequel sont disposées les bobines (68) de fil.

8. Dispositif d'enroulement filamentaire selon l'une quelconque des revendications 4 à 7, caractérisé en ce que les moyens d'alimentation et d'enduction (34) de liant comprennent des galets (62) montés libres en rotation dans un bac (64) de réserve de liant.

9. Dispositif d'enroulement filamentaire selon l'une quelconque des revendications 4 à 8, caractérisé en ce qu'il comprend des peignes (60) disposés notamment à l'entrée et à la sortie du bac (64) de réserve de liant, ainsi qu'à la sortie de la tête de guidage (48).

10. Dispositif d'enroulement filamentaire selon l'une quelconque des revendications 4 à 9, caractérisé en ce que les moyens d'alimentation comprennent deux nappes de seize fils qui sont disposées en une nappe unique (80) par interposition des fils de chacune des nappes dans un même plan.
